# EUROPÄISCHE PATENTSCHRIFT

(11) **EP 4 038 268 B1**
(45) Veröffentlichungstag und Bekanntmachung des Hinweises auf die Patenterteilung: **15.01.2025**
(21) Anmeldenummer: 20789885.9
(22) Anmeldetag: 02.10.2020
(51) Int. Cl.: F02D 41/18, G01F 1/72, F02D 41/28, G01F 1/36, G01F 1/50

(54) **VERFAHREN ZUR BESTIMMUNG DES MASSENSTROMS IN EINEM VERBRENNUNGSMOTOR**
METHOD FOR DETERMINING THE MASS FLOW IN AN INTERNAL COMBUSTION ENGINE
PROCÉDÉ DE DÉTERMINATION DU DÉBIT MASSIQUE DANS UN MOTEUR À COMBUSTION INTERNE

(30) Priorität: 04.10.2019 DE 102019126783
(43) Veröffentlichungstag der Anmeldung: 10.08.2022
(73) Patentinhaber: Systec Automotive GmbH, 82178 Puchheim (DE)
(72) Erfinder: BETZ, Oliver, 82194 Gröbenzell (DE); HAITHEM, Ben Abdelkader, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2020/077720
(87) Internationale Veröffentlichungsnummer: WO 2021/064207

(56) Entgegenhaltungen:
- DE-A1- 102013 106 723
- US-A- 5 646 344
- US-A1- 2006 224 298
- US-A1- 2011 313 687

## Beschreibung

Die Erfindung betrifft ein Verfahren zur Bestimmung des Massenstroms nach dem Differenzdruckverfahren an einem Verbrennungsmotor, wobei zur Berechnung eines Massenstromsignals ein Massenstrommesser vorzugsweise als Kombination aus einem oder mehrerer Sensoren für Differenzdruck, Absolutdruck, Temperatur, Feuchtigkeit und Gaszusammensetzung und einer Recheneinheit besteht. Das Massenstromsignal wird von der Auswerteeinheit aus den Sensormesswerten errechnet und gefiltert wobei das gefilterte Massenstromsignal an die Motorsteuerung gesendet wird. Des Weiteren betrifft die Erfindung eine Auswerteeinheit zum Bestimmen des Massenstroms in einem Verbrennungsmotor, insbesondere zur Durchführung eines Verfahrens nach einem der vorangegangenen Ansprüche, wobei die Auswerteeinheit eine Schnittstelle zu einem Datenbussystem einer Motorsteuerung des Verbrennungsmotors umfasst.

Massenstrommesser, die in Verbrennungsmotoren die Luftmasse oder die Abgasmasse (EGR), messen, haben mit einer Vielzahl von Störgrößen zu kämpfen. Die Gasmassenströme in Verbrennungsmotoren unterliegen massiven Druck- und Durchflussschwankungen, sogenannten Pulsationen sowie schnellen Änderungen der Temperatur und Zusammensetzung. Je näher die Messung am Zylinder erfolgt, desto höher sind diese Pulsationen und Messwertschwankungen. Besonders die Messung von Abgas, dass der Verbrennungsluft wieder zugeführt werden soll, die Abgasrückführung (ARG oder EGR genannt), erweist sich in dieser Hinsicht als sehr schwierig.

Die AGR und die Verbrennungsluft werden an vielen Verbrennungsmotoren nach dem Differenzdruckprinzip gemessen. Beim Differenzdruckprinzip wird kinetische Energie also die Strömungsgeschwindigkeit, in potentielle Energie, also in ein Druckgefälle (Differenzdruck) umgewandelt. Der gemessene Differenzdruck ist somit ein Maß für die Fließgeschwindigkeit des Massenstroms. Wegen der quadratischen Charakteristik der kinetischen Energie, ist das erzeugte Druckgefälle insbesondere bei niedrigen Geschwindigkeiten des Massenstroms und damit einhergehender geringer Durchflüsse sehr klein.

Ungünstigerweise sind am Verbrennungsmotor, insbesondere bei kleinen Durchflüssen der AGR/EGR, auch noch die Druck- und Durchflusspulsationen sehr hoch. Aufgrund der niedrigen Drehzahlen des Verbrennungsmotors, die unter Umständen auch noch mit hohen Lastwerten kombiniert sind, entstehen besonders markante Pulsationen. Das Nutzsignal / Störsignal-Verhältnis ist daher für Messungen nach dem Differenzdruck (dp) an diesen Punkten sehr ungünstig. Dies wird aktuell versucht durch geeignete Filter zu egalisieren, mit denen das Messsignal gedämpft wird.

DE 10 2013 106723 A1 offenbart einen Massenstromsensor zur Bestimmung des Massenstroms durch eine Leitung mithilfe eines Differenzdrucks. US 5 646 344 A offenbart eine Motorsteuerung, welche eine Filterung eines pulsierenden Messsignals eines Luftmassenstroms beispielsweise anhand der Motordrehzahl anpasst. US 2006/224298 AI1 offenbart eine Filterung eines Messsignals eines gasförmigen Massenstroms anhand einer Analyse der Pulsationen der aktuellen Messwerte.

Derartige Filterungen und die ihnen zu Grunde liegenden Filterparameter sind bei der Differenzdruck-Messung sehr komplex und beziehen sich insbesondere auf die Filterung von Absolutdruck (pabs), Differenzdruck (dp), Temperatur (temp) und Gaszusammensetzung vor und nach der Massenstromberechnung und auf die Filterung des berechneten Massenstromsignales und der errechneten Mediumsdichte. Abhängig von Art, Frequenz und Höhe der Pulsationen wird ein optimales Messergebnis durch unterschiedliche Filterungen erzielt. Ein solcher multipolarer Filter, welcher auf die aktuelle Pulsationscharakteristik die Motors angepasst wird, hat gegenüber einem Festfilter deutliche Vorteile.

Ein multipolarer Filter führt eine selbstadaptive Filterung durch, deren Ergebnis von der Messdynamik abhängt: Um eine optimal Regelgüte zu erzielen, muss der multipolare Filter auf die aktuelle Messsituation angepasst werden. Dies kann durch eine intelligente Analyse der Pulsationen der aktuellen Messwerte geschehen (dp, pabs, temp, Gaszusammensetzung). Hierzu wird insbesondere die Pulsationshöhe und Frequenz der Rohmesswerte analysiert und daraus dann die Filterparameter für die verschiedenen Filter optimiert.

Nachteil der selbstadaptiven Filterung ist die Tatsache, dass zunächst eine Anzahl von durch die Ventilöffnungen im Zylinder bedingte Pulsationen analysiert werden müssen, um neue Filterparameter zu ermitteln. Dies sind typische 2-3 Zündzeitpunkte aller Zylinder oder 4-6 Motorumdrehungen (bei z.B. 800 u/min entsprechen 4 Umdrehungen 300 mS). Insbesondere bei dynamischen Lastwechselbetrieb und niedrigen Drehzahlen, wie dies bei Nutzfahrzeugmotoren häufig der Fall ist, kann dies zu langsam sein, um im Lastwechselfall eine ausreichende Regelgüte zu erreichen.

Zur emissionsoptimalen Steuerung von Verbrennungsmotoren sind jedoch eine hohe Genauigkeit der Luftmassenmessung, eine hohe Signalgüte und Stabilität der Messwerte bei gleichzeitig hoher Messdynamik erforderlich. Nach dem aktuellen Stand der Technik schließen sich diese Messparameter aber gegenseitig aus. Ein schlechtes Signal / Rauschen -Verhältnis führt zu schlechten Genauigkeiten, eine hohe Dämpfung und damit Regelgüte führt zu niedriger Signaldynamik.

Diese Anmeldung stellt sich die Aufgabe, die Steuerung von Verbrennungsmotoren zu optimieren. Hierzu schlägt sie ein Verfahren gemäß Anspruch 1 und einen Massenstrommesser gemäß Anspruch 6 vor. Einige bevorzugte Ausgestaltungen der Erfindung werden in den jeweiligen Unteransprüchen genannt.

Ein wesentlicher Grundgedanke der Erfindung ist es, ein Verfahren vorzuschlagen, bei dem die Filterparameter der Auswerteeinheit auf eine Messsituation abgestimmt werden, wobei in einer ersten Messsituation die Filterparameter anhand einer Analyse von Pulsationen der aktuellen Messwerte gesetzt werden und wobei in einer zweiten Messsituation die Filterparameter anhand von der Motorsteuerung übertragener aktueller Zustandsdaten des Verbrennungsmotors gesetzt werden. Ein weiterer wesentlicher Grundgedanke ist es, einen Massenstrommesser zur Bestimmung des Massenstroms in einem Verbrennungsmotor vorzuschlagen, bei dem die Filterparameter des Massenstromsignals auf Basis von Zustandsdaten des Verbrennungsmotors bestimmt sind, welche in der Motorsteuerung vorliegen. Eine solcher Massenstrommesser weist vorzugsweise eine Kombination aus einem oder mehrerer Sensoren für Differenzdruck, Absolutdruck, Temperatur, Feuchtigkeit und Gaszusammensetzung und einer Auswerteeinheit auf. Die Gaszusammensetzung kann alternativ oder ergänzend dazu von der Auswerteeinheit auch aus einem Modell errechnet werden, welches die EGR Rate aus einen Verhältnis von EGR Masse zu Luftmasse bestimmt.

Diese Grundgedanken ermöglichen eine zweite Messsituation für die Bestimmung des Massenstroms vorzusehen, bei der ein motordynamisch adaptiver Filter eingesetzt wird. In der zweiten Messsituation werden keine Filterparameter vom Sensor selbstadaptiv ermittelt, sondern durch ein vom Verbrennungsmotor, insbesondere von der Motorsteuerung des Verbrennungsmotors übertragenes Zustands-Signal optimiert. Im Moment des Last- oder Drehzahlwechsels kann also der Sensor sofort die Filterparameter neu und optimal setzen. Dadurch ist auch in der zweiten Messsituation eine optimale Regelgüte der Messwerte gewährleistet.

Diese Merkmale ermöglichen einen intelligenten Massenstrommesser, der zumindest den Druck, die Temperatur und den Differenzdruck intern misst und mit der Motorsteuerung (ECU) des Verbrennungsmotors über einen Datenbus insbesondere digital, beispielsweise per CAN-BUS kommuniziert. Die erfindungsgemäße Auswerteeinheit sendet nicht nur ihre Messwerte an die ECU, sondern erhält von dieser auch relevante Motorkenndaten respektive Zustandsdaten, dies sind beispielsweise, Motordrehzahl, Last, Klappenstellung des EGR- bzw. des Drosselventils. Mit einem Zustands-Signal respektive Zustandsdaten des Verbrennungsmotors sind demzufolge Daten des Verbrennungsmotors umfasst, die dessen gegenwärtigen Zustand betreffen. In einer besonders bevorzugten Ausführungsform betreffen diese Signale oder Daten auch unmittelbar bevorstehende Zustandsänderungen des Verbrennungsmotors, beispielsweise bedingt durch gegenwärtig an den Verbrennungsmotor gegebene Steuerungssignale, welche eine Zustandsänderung des Motors zur Folge haben werden (z.B. Lastabruf durch den Fahrer).

Insbesondere bei niedrigen Drehzahlen des Verbrennungsmotors ist es vorteilhaft, wenn die von den Sensoren gemessenen Werte vor der Berechnung des Massenstromsignals gefiltert werden und das Ergebnis der Massenstromberechnung einer weiteren Filterung unterzogen wird. Dies ermöglicht es, ein für die Regelung stabiles Signal zu generieren.

Neben der Messung von Durchflüssen, gibt es auch die Möglichkeit, solche Durchflüsse (egal ob EGR oder Luft) durch Motormodelle zu simulieren, sogenannte Befüllmodelle. Dies ist für die Motorsteuerung schwierig, weil sich die Motorcharakteristik im Betrieb ändert. insbesondere die Alterung von EGR-Kühlern und auch der Verschleiß an Zylindern und Dichtungen lassen das Befüllmodell zusehend schlechter werden. Die erfindungsgemäße Auswerteeinheit eröffnet aber die Möglichkeit, ein Befüllmodell zu integrieren und dieses kontinuierlich zu adaptieren. Ein Befüllmodell ist insbesondere da interessant, wo die Auswerteeinheit selber schlecht funktioniert, also z.B. bei kleinen Durchflüssen und hohen Pulsationen aufgrund von beispielsweise niedriger Drehzahl, hoher Last, bzw. einem ungünstigen Signal/Rauschen-Verhältnis. Hier kann die Auswerteeinheit auf ein Last/Drehzahl/Ventilposition-basiertes Modell umschalten.

Von besonderem Vorteil ist es dabei, wenn das Befüllmodell an einen Verschleiß von Komponenten des Verbrennungsmotors angepasst wird. Für diese Messsituation kann sich die Auswerteeinheit idealerweise selber auf Basis der gewonnen Daten im günstigen Lastbereich, wie beispielsweise hoher Drehzahl und hoher Last optimieren und im Betrieb des Fahrzeuges auch kontinuierlich auf die sich durch Alterung ändernde Motorcharakteristik adaptieren.

## Patentansprüche

1. Verfahren zur Bestimmung des Massenstroms nach dem Differenzdruckverfahren an einem Verbrennungsmotor, wobei zur Berechnung eines Massenstromsignals ein Massensstrommesser mittels Sensoren einen Differenzdruck (dp), einen Absolutdruck (pabs) und die Temperatur (temp) des Massenstroms misst, wobei der Massenstrommesser mit der Motorsteuerung des Verbrennungsmotors über einen Datenbus kommuniziert, wobei das Massenstromsignal von einer Auswerteeinheit des Massenstrommessers gefiltert wird und wobei das gefilterte Massenstromsignal an die Motorsteuerung gesendet wird, **dadurch gekennzeichnet,**
**dass** die Filterparameter von der Auswerteeinheit auf eine Messsituation abgestimmt werden, wobei in einer ersten Messsituation die Filterparameter anhand einer Analyse von Pulsationen der aktuellen Messwerte gesetzt werden und wobei in einer zweiten Messsituation die Filterparameter anhand von der Motorsteuerung übertragener, von der Auswerteeinheit erhaltener Zustandsdaten des Verbrennungsmotors gesetzt werden.

2. Verfahren nach Anspruch 1,
**dadurch gekennzeichnet,**
**dass** die aktuellen Zustandsdaten des Verbrennungsmotors einen Lastzustand und/oder eine Drehzahl des Verbrennungsmotors und/oder eine Klappenstellung einer Abgasrückführung des Verbrennungsmotors umfassen.

3. Verfahren nach Anspruch 1 oder 2,
**dadurch gekennzeichnet,**
**dass** ein Wechsel von der ersten Messsituation zu der zweiten Messsituation bei einem Lastwechsel des Verbrennungsmotors erfolgt.

4. Verfahren nach einem der vorangegangenen Ansprüche,
**dadurch gekennzeichnet,**
**dass** in einer dritten Messsituation ein Befüllmodell des Verbrennungsmotors zur Bestimmung der Filterparameter herangezogen wird.

5. Verfahren nach Anspruch 4,
**dadurch gekennzeichnet,**
**dass** das Befüllmodell an einen Verschleiß von Komponenten des Verbrennungsmotors angepasst wird.

6. Massenstrommesser zur Durchführung eines Verfahrens nach einem der vorangegangenen Ansprüche, der im Betrieb das Verfahren durchführt, wobei der Massenstrommesser Sensoren zur Messung eines Differenzdruckes (dp), eines Absolutdrucks (pabs) und der Temperatur (temp) des Massenstroms umfasst, wobei der Massenstrommesser eine Auswerteeinheit zur Berechnung eines Massenstromsignals umfasst und wobei der Massenstrommesser eine Schnittstelle zu einem Datenbussystem einer Motorsteuerung des Verbrennungsmotors umfasst, **dadurch gekennzeichnet,**
**dass** die Parameter zur Filterung des Massenstromsignals Zustandsdaten des Verbrennungsmotors enthalten.

7. Sonde nach Anspruch 6,
**dadurch gekennzeichnet,**
**dass** die Zustandsdaten einen Lastzustand und/oder eine Drehzahl des Verbrennungsmotors und/oder eine Klappenstellung einer Abgasrückführung des Verbrennungsmotors umfassen.

## Claims

1. A method for determining the mass flow according to the differential pressure method in an internal combustion engine, wherein a mass flowmeter measures a differential pressure (dp), an absolute pressure (pabs) and the temperature (temp) of the mass flow by means of sensors in order to calculate a mass flow signal, wherein the mass flowmeter communicates with the engine control of the internal combustion engine via a data bus, wherein the mass flow signal is filtered by an evaluation unit of the mass flowmeter and wherein the filtered mass flow signal is sent to the engine control, **characterised in that**
the filtering parameters are calibrated by the evaluation unit to a measurement situation, wherein in a first measurement situation the filtering parameters are set on the basis of an analysis of pulsations of the current measured values and wherein in a second measurement situation the filtering parameters are set on the basis of status data of the internal combustion engine transferred from the engine control and received by the evaluation unit.

2. The method according to claim 1,
**characterised in that**
the current status data of the internal combustion engine include a load state and/or a speed of the internal combustion engine and/or a flap setting of the exhaust gas recirculation of the internal combustion engine.

3. The method according to claim 1 or 2,
**characterised in that**
a change from the first measurement situation to the second measurement situation takes place with a load change of the internal combustion engine.

4. The method according to any one of the preceding claims, **characterised in that**
in third measurement situation a filling model of the internal combustion engine is used to determine the filtering parameters.

5. The method according to claim 4,
**characterised in that**
the filling model is adapted to wear on components of the internal combustion engine.

6. A mass flowmeter for performing a method according to any one of the preceding claims, which performs the method during operation, wherein the mass flowmeter includes sensors for measuring a differential pressure (dp), an absolute pressure (pabs) and the temperature (temp) of the mass flow, wherein the mass flowmeter includes an evaluation unit for calculating a mass flow signal and wherein the mass flowmeter includes an interface with a data bus system of an engine control of the internal combustion engine,
**characterised in that**
the parameters for the filtering of the mass flow signal contain status data of the internal combustion engine.

7. A probe according to claim 6,
**characterised in that**
the status data include a load state and/or a speed of the internal combustion engine and/or a flap setting of the exhaust gas recirculation of the internal combustion engine.

## Revendications

1. Procédé de détermination du débit massique selon la méthode de pression différentielle sur un moteur à combustion interne, dans lequel pour calculer un signal de débit massique, un débitmètre massique mesure au moyen de capteurs une pression différentielle (dp), une pression absolue (pabs) et la température (temp) du débit massique, dans lequel le débitmètre massique communique avec l'unité de commande de moteur du moteur à combustion interne par l'intermédiaire d'un bus de données, dans lequel le signal de débit massique est filtré par une unité d'évaluation du débitmètre massique et dans lequel le signal de débit massique filtré est envoyé à l'unité de commande de moteur,
**caractérisé en ce que**
les paramètres de filtrage sont harmonisés par l'unité d'évaluation à une situation de mesure, dans lequel dans une première situation, des paramètres de filtrage sont réglés sur la base d'une analyse des pulsations des actuelles valeurs de mesure et dans lequel dans une deuxième situation de mesure, les paramètres de filtrage sont réglés sur la base des données d'état du moteur à combustion interne transmise par l'unité de commande de moteur, obtenues par l'unité d'évaluation.

2. Procédé selon la revendication 1, **caractérisé en ce que** les données d'état actuelles comprennent un état de charge et/ou une vitesse de rotation du moteur à combustion interne et/ou une position de clapet d'une recirculation de gaz d'échappement du moteur à combustion interne.

3. Procédé selon la revendication 1 ou 2, **caractérisé en ce que** une alternance de la première situation de mesure à la deuxième situation de mesure a lieu lors d'une alternance de charge du moteur à combustion interne.

4. Procédé selon une des revendications précédentes, **caractérisé en ce que** dans une troisième situation de mesure un modèle de remplissage du moteur à combustion interne est utilisé pour déterminer les paramètres de filtrage.

5. Procédé selon la revendication 4, **caractérisé en ce que** le modèle de remplissage est adapté à une usure des composants du moteur à combustion interne.

6. Débitmètre massique pour mettre en œuvre le procédé selon une des revendications précédentes, qui exécute en fonctionnement le procédé, dans lequel le débitmètre massique comprend des capteurs pour mesurer une pression différentielle (dp), une pression absolue (pabs) et la température (temp) du débit massique, dans lequel le débitmètre massique comprend une unité d'évaluation pour calculer un signal de débit massique et dans lequel le débitmètre massique comprend une interface d'un système de bus de données d'une unité de commande de moteur du moteur à combustion interne, **caractérisé en ce que** les paramètres pour le filtrage du signal de débit massique contiennent des données d'état du moteur à combustion interne.

7. Sonde selon la revendication 6, **caractérisée en ce que** les données d'état comprennent un état de charge et/ou une vitesse de rotation du moteur à combustion interne et/ou une position de clapet d'une recirculation de gaz d'échappement du moteur à combustion interne.
